# EUROPÄISCHE PATENTSCHRIFT

(11) **EP 1 122 136 B1**
(45) Veröffentlichungstag und Bekanntmachung des Hinweises auf die Patenterteilung: **23.11.2005**
(21) Anmeldenummer: 01100876.0
(22) Anmeldetag: 16.01.2001
(51) Int. Cl.: B60R 22/46

(54) **Verfahren und Sicherheits-Rückhalteeinrichtung zum Zurückhalten eines Insassen auf einem Fahrzeugsitz**
Safety device and method for restraining and occupant in a vehicle seat
Procédé et dispositif de sécurité assurant le maintien d'un occupant dans un siège de véhicule

(30) Priorität: 04.02.2000 DE 10005010
(43) Veröffentlichungstag der Anmeldung: 08.08.2001
(73) Patentinhaber: DaimlerChrysler AG, 70567 Stuttgart (DE)
(72) Erfinder: Brambilla, Luigi, Dr., 71032 Böblingen (DE); Bullinger, Wilfried, 70825 Korntal-Münchingen (DE); Eberle, Walter, 73269 Hochdorf (DE); Gimbel, Jürgen, 75391 Gechingen (DE); Hartlieb, Markus, 72141 Walddorfhäslach (DE); Paviot, Florent, 70794 Filderstadt (DE); Zerrweck, Frank, 71155 Altdorf (DE)

(56) Entgegenhaltungen:
- EP-A- 0 893 313
- WO-A-99/51469
- DE-A- 4 411 184
- DE-A- 19 520 721
- US-A- 5 788 281
- US-A- 5 835 007

## Beschreibung

Die Erfindung betrifft ein Verfahren zum Zurückhalten eines Insassen auf einem Fahrzeugsitz gemäß dem Oberbegriff des Patentanspruchs 1, sowie eine Sicherheits-Rückhalteeinrichtung zum Zurückhalten des Insassen auf einem Fahrzeugsitz während eines Verkehrsunfalls, insbesondere zur Verwendung in einem Verfahren gemäß dem Oberbegriff des Patentanspruchs 15.

Sicherheits-Rückhaltesysteme befinden sich heutzutage auf den meisten Sitzen in Kraftfahrzeugen. Sie dienen dazu, bei einer Verunfallung des Fahrzeuges die Verletzungen der Insassen möglichst gering zu halten. Dabei werden heutzutage aktive Systeme, wie insbesondere Sicherheitsgurte und sogenannte Airbags, eingesetzt.

Sicherheitsgurte werden in Kraftfahrzeugen schon seit langer Zeit eingesetzt. Es sind daher auch viele verschiedene Arten von sogenannten Gurten bekannt, die zur Sicherheit von in Fahrzeugen befindlichen Personen dienen. So werden beispielsweise viele Fahrzeuge mit im Handel befindlichen Gurten ausgerüstet, die entweder an zwei oder an drei Befestigungspunkten im Fahrzeug angeordnet sind, und die bei einem plötzlichen scharfen Abbremsen oder Aufprallen des Fahrzeuges auf ein Hindernis ein infolge der Trägheitskraft bedingtes Nachvornfliegen der Körper der im Fahrzeug befindlichen Personen verhindern sollen.

Prallt ein Fahrzeug, insbesondere bei hoher Geschwindigkeit, auf ein Hindernis, so werden die Insassen infolge der Trägheitskraft nach vorn geschleudert. Bei Nichtvorhandensein von Sicherheitseinrichtungen enden derartige Unfälle für im Fahrzeug befindliche Personen meist mit schweren, zum Teil tödlichen Verletzungen. Sind die Fahrzeuge dagegen unter anderem mit Sicherheitsgurten ausgerüstet, so bestehen zwar für die Insassen meist Überlebenschancen, dennoch kommt es aber immer wieder zu Verletzungen insbesondere im Brust- und Schulterbereich. Die Ursachen hierfür liegen darin, daß sich die Insassen häufig in einer Sitzposition befinden, in der sie sich nicht an der Rükkenlehne anlehnen.

Um zu vermeiden, daß der Gurt bei einem Aufprall oder einer starken Bremsung zu lang eingestellt ist, wurde beispielsweise in der DE-OS 22 27 121 ein Rückhaltegurtsystem beschrieben, bei dem ein Gurtstrammer verwendet wird, der den Sitzgurt zurückzieht, wenn eine Fahrzeugkollision auftritt. Hierdurch kann gewährleistet werden, daß sich der Insasse in der für ihn günstigen Sitzposition während des Aufpralles befindet.

Die DE 44 11 184 beschreibt ein Rückhaltegurtsystem, bei dem eine auf den Sitzgurt ausgeübte Strammkraft in drei Schritten gesteuert wird. Mit Hilfe eines sogenannten Vorstrammers wird nämlich der Sitzgurt vor einem Fahrzeugzusammenstoß nur bis zu einer vorgegebenen Vorspannkraft gespannt, die jedoch in einem zweiten Schritt immer dann wieder zurückgenommen wird, wenn ein vorsorglich erwarteter Fahrzeug-Zusammenprall ausbleibt. Bei einem dritten Schritt wird der weitere Gurtstrammer den Sitzgurt auf eine größere Vorspannkraft zurückziehen, was beim Feststellen eines tatsächlichen Fahrzeug-Zusammenstoßes erfolgt.

In der DE-OS 2 159 265 wird eine Rückhaltevorrichtung beschrieben, bei der beim Betätigen der Bremse eine Vorspannung der Haltegurte aufgebaut wird. So stützen sich die Gurte im Augenblick der Kollision unter noch erträglicher Vorspannung am Körper des Insassen ab.

Die EP 0 560 181 beschreibt eine Antriebsvorrichtung zur Bewegung von KFZ-Bauteilen aus einer Normalposition in eine Sicherheitsposition. Der hierbei eingesetzte Sensor spricht auf eine überhöhte Fahrzeuggeschwindigkeitsänderung an, wonach ein in einem Kolben angeordneter Gasgenerator durch Zündung ein Druckgas freisetzt und dadurch den Kolben antreibt, mit dem dann beispielsweise das Sicherheitsgurt-Rückhaltesystem aktiviert werden kann.

In dem in der DE-PS 22 49 759 C2 beschriebenen Haltesystem für Kraftfahrzeuginsassen erfolgt das Spannen des Sicherheitsgurtes ab einer vordefinierten Beschleunigungsschwelle, und die Größe der Spannkraft wird abhängig von der Fahrgeschwindigkeitsänderung pro Zeiteinheit und/oder dem Gewicht des Insassen eingestellt.

Aus der EP 0 893 313 A2 ist ein Verfahren zum Zurückhalten eines Insassen auf einem Fahrzeugsitz bekannt, bei dem der Insasse bei Erkennen eines kritischen Fahrzeugzustandes über einen reversiblen Gurtstraffer mit einer Kraft in den Fahrzeugsitz gezogen wird. Das erfolgt durch sanftes Anziehen des Gurtbandes. Anschließend erfolgt ein Blockieren des Gurtbandes.

All diese aus dem Stand der Technik bekannten Sicherheitssysteme weisen jedoch den Nachteil auf, daß die Gurtlose vor einem Unfall durch ein Vorspannsystem entfernt, aber die Gurtkraft nicht an die Sitzposition angepaßt und damit die Belastung des Insassen hoch ist.

Ausgehend von diesem bekannten Stand der Technik liegt der Erfindung die Aufgabe zugrunde, ein Verfahren sowie eine Sicherheits-Rückhalteeinrichtung zum Zurückhalten eines Insassen auf einem Fahrzeugsitz bereitzustellen, mittels derer es möglich ist, die Belastungen auf den Insassen beim Vorspannen der Gurtlose auf ein Minimum zu reduzieren, jedoch gleichzeitig auf ein erforderliches Maß einzustellen.

Diese Aufgabe wird durch die kennzeichnenden Merkmale der Patentansprüche 1 und 15 gelöst.

Mit der erfindungsgemäßen Lösung werden die Insassen in einem Fahrzeug, insbesondere auch der Beifahrer, der sich nicht immer in einer völlig zurückgezogenen Position befindet und sogar nach vorne geneigt sein kann (out of position), zuerst mit einer bestimmten Kraft zurück in den Sitz gezogen, um dann mit einer Haltekraft, die geringer gewählt wird, während des kritischen Fahrzeugzustandes gehalten zu werden.

Dadurch können vorteilhafterweise die bei den Schutzsystemen möglichen Verletzungen der Insassen möglichst gering gehalten werden.

Durchgeführt werden kann dieses erfindungsgemäße Verfahren insbesondere mit einer erfindungsgemäßen Sicherheits-Rückhalteeinrichtung zum Zurückhalten des Insassen auf einem Fahrzeugsitz während eines kritischen Fahrzustandes, bei der der Sicherheitsgurt, ein Gurtstraffer oder dergleichen bei einem gefährlichen Fahrzustand mit einer Kraft beaufschlagt wird, wodurch der Insasse zuerst in den Fahrzeugsitz gezogen wird und dann in einer zurückgezogenen Position mit einer geringeren Haltekraft auf dem Fahrzeugsitz gehalten wird.

Eine solche Vorrichtung hat sich zum Durchführen eines erfindungsgemäßen Verfahrens bei allen erdenklichen kritischen Fahrzuständen als vorteilhaft erwiesen. So z.B. bei einer Vollbremsung oder einem Fahrzeugaufprall, einem Überschlagsfall oder auch beim Schleudern oder Querrutschen des Fahrzeuges. Denn durch das Zurückhalten der Insassen vor einer Verunfallung kann nicht nur, wie schon beschrieben wurde, das Verletzungsrisiko verringert werden, sondern insbesondere bei einem Schleudervorgang wird der Fahrer während des kritischen Zustandes in einer sicheren Position auf dem Sitz gehalten. Damit kann der Fahrer auch die Fahrmanöver in diesem gesicherten Zustand besser ausführen und so zu einer Stabilisierung des Fahrzustandes aktiv beitragen.

Weitere Vorteile, vorteilhafte Ausgestaltungen und Weiterbildungen der Erfindung ergeben sich aus den Unteransprüchen und den im folgenden anhand der Zeichnung erläuterten Ausführungsbeispielen, wobei die Zeichnung bevorzugte Ausführungen des erfindungsgemäßen Verfahrens und der Sicherheitsrückhaltevorrichtung zum Zurückhalten eines Insassen auf einem Fahrzeugsitz zeigt.

Es zeigt hierbei:
- Fig. 1: ein Diagramm, das den Verlauf der Kraft des Gurtstraffers über der Zeit darstellt, gemäß den bisher im Stand der Technik verwendeten Verfahren;
- Fig. 2: ein Diagramm, das den Verlauf der Kraft des Gurtstraffers über der Zeit darstellt, gemäß einer bevorzugten Ausführungsform des erfindungsgemäßen Verfahrens;
- Fig. 3: ein Diagramm, das den Verlauf der Kraft des Gurtstraffers über der Zeit darstellt, gemäß einer bevorzugten Ausführungsform des erfindungsgemäßen Verfahrens, wobei die Gurtstraffung abhängig ist von der Relativgeschwindigkeit und der Zeitreserve bis zum Unfall;
- Fig. 4: ein Blockschaltbild, das stark schematisiert eine bevorzugte Ausführungsform des erfingsgemäßen Verfahrens zeigt.

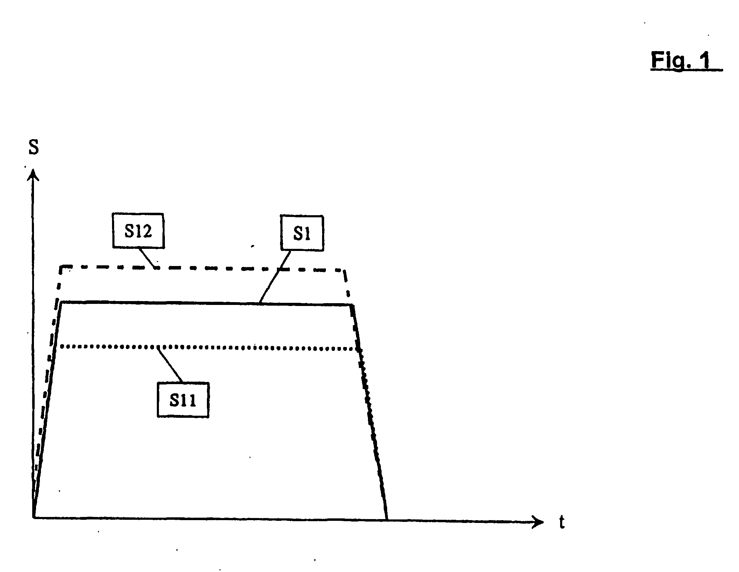

In Fig. 1 ist die Situation einer Notbremsung oder Panikbremsung vor einem kritischen Fahrzustand dargestellt, wobei das Rückhalten der Insassen nach einem aus dem Stand der Technik bekannten Verfahren erfolgt. Es ist dabei der Verlauf der Kraft S über der Zeit t dargestellt.

Bei einer Notbremsung, die durch den Fahrer selbst oder auch mit Hilfe eines Bremsassistenten oder einer automatischen Bremsung ausgelöst wird, wird der reversible Gurtstraffer aktiviert und ein Kraftniveau S1, wie in Fig. 1 gezeigt, angesteuert. Dieses Kraftniveau entspricht dabei einer beispielsweise durch Versuche vorbestimmten Haltekraft S1 eines durchschnittlichen Insassen. Das Halten des Insassen erfolgt also bereits zu einem Zeitpunkt vor der Verunfallung.

Zusätzlich könnte es dabei vorgesehen sein, mit Hilfe einer Gewichtserkennung das Gewicht des Insassen zu bestimmen und das Kraftniveau S bei schwereren Insassen auf ein höheres Niveau S12 anzuheben oder auf ein niedrigeres Niveau S11 bei leichten Insassen abzusenken.

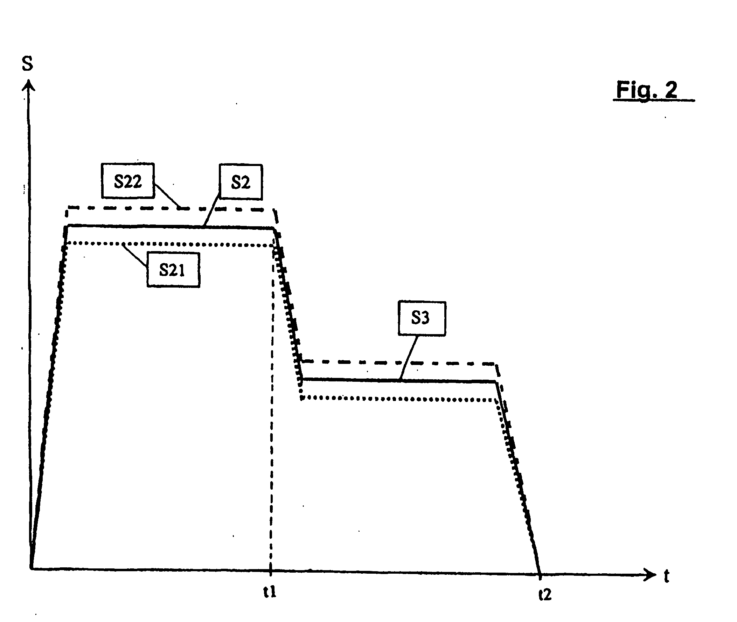

Im Gegensatz zu diesem aus dem Stand der Technik bereits bekannten und heutzutage auch häufig eingesetzten Verfahren, wird bei dem erfindungsgemäßen Verfahren zum Zurückhalten eines Insassen auf einem Fahrzeugsitz der Insasse bei Erkennen eines kritischen Fahrzustandes mittels eines Gurtstraffers mit einer bestimmten Kraft S2 - wie in Fig. 2 schematisch dargestellt - in den Fahrzeugsitz gezogen und dann in einer zurückgezogenen Position mit einer Haltekraft S3 auf dem Fahrzeugsitz gehalten. Dabei wird die Haltekraft S3 auf den Insassen geringer gewählt als die Kraft S2, die zum Zurückziehen des Insassen verwendet wird.

Mit einer Insassenpositionserkennung könnte bei dem in Fig. 2 dargestellten Verfahren beispielsweise ermittelt werden, ob der Insasse sich in einer normalen Sitzposition befindet, und die Ansteuerung hiervon abhängig vorgenommen werden. Die Insassenposition kann dabei beispielsweise über eine Infrarotsensorik, Ultraschallsensorik, Radarsensorik, Gurtauszugsmessung, über die Position des Sitzes und der Lehne und/oder der Bewegungsmessung des Antriebes erfolgen.

Befindet sich der Insasse in einer vorgelagerten Position wie beispielsweise einer "out of position" Sitzposition zum Airbag, was üblicherweise insbesondere beim Beifahrer der Fall sein wird, so wird er mit der Kraft S2 in den Fahrzeugsitz, also in die normale Sitzposition zurückgezogen und nach einer Zeit tl mit einer geringeren Kraft S3 während des gesamten kritischen Fahrzeugzustandes gehalten.

Hierbei hat es sich gezeigt, daß die Kraft S2 zum Zurückziehen des Insassen vorteilhafterweise zwischen 200 und 1500 N liegt. Die biomechanischen Grenzen für die Kraft, mit der ein Insasse beaufschlagt werden kann, liegt bei gesunden Menschen zwar bei 6000 N, jedoch hat sich eine Kraft von zwischen 200 und 1500 N zum Zurückziehen als normalerweise völlig ausreichend erwiesen. Dadurch kann das Zurückziehen für den Insassen sehr akzeptabel gestaltet werden und Verletzungen ausgeschlossen werden.

Die Haltekraft S3 nach dem Zurückziehen des Insassen soll dagegen günstigerweise zwischen 100 und 600 N liegen. Dieses Kraftniveau ist aus Akzeptanzgründen und insbesondere zur Vermeidung von Verletzungen durch den Sicherheitsgurt möglichst niedrig zu halten. Dennoch soll eine große Sicherheit gewährleistet sein. Es hat sich gezeigt, daß diese Kraft zum Halten des Insassen besonders vorteilhaft mit ca. 100 bis 600 N bemessen ist.

Ein Verringern der Kraft nach dem Zurückziehen ist deshalb möglich, da der Insasse bereits in den Sitz zurückgezogen ist und dadurch keine freie Bewegung des Insassen durch einen zu lange eingestellten Gurt bei einer Vollbremsung stattfindet.

Insbesondere von Vorteil ist es bei dem erfindungsgemäßen Verfahren, wenn die Kräfte, d.h. die Haltekraft und die Kraft zum Zurückziehen des Insassen, an das jeweilige Gewicht des Insassen angepaßt werden. Die Gurtkräfte können besonders vorteilhaft auch an die Gurtführung, d.h. die Sitzstellung angepaßt werden.

Dies bedeutet, wie es in der Fig. 2 dargestellt ist, daß bei Vorhandensein von Gewichtssensoren auf oder an dem Fahrzeugsitz das jeweilige Kraftniveau S2 oder S3, also Haltekraft und Rückziehkraft, bei schweren Insassen entsprechend angehoben (auf S22) oder abgesenkt(auf S21) werden kann, um so neben einer optimalen Sicherung einen maximalen Komfort des Insassen zu gewährleisten.

Daneben könnte die Haltekraft S3 auch an die Fahrzeugverzögerung angepaßt werden. Denn auch so kann das Kraftniveau noch weiter optimiert werden, das heißt ein optimales Halten des Insassen auf dem Fahrzeugsitz gewährleistet und auf der anderen Seite aber die Kraft so gering wie möglich gehalten werden, damit die Belastungen durch den Sicherheitsgurt gering gehalten werden können und der Insasse einen größtmöglichen Komfort erfährt.

Dies trifft ebenso zu, wenn die Haltekraft S3 an die Fahrzeuggeschwindigkeit angepaßt wird.

Gemäß einer bevorzugten Ausführungsform des erfindungsgemäßen Verfahrens erfolgt das Umschalten von einem höheren Kraftniveau der Kraft S2 zum Zurückziehen auf ein niedrigeres Kraftniveau S3 zum Halten nach einer vorbestimmten Zeit. Dies bedeutet mit Bezug auf Fig. 2, daß die Zeit tl beispielsweise ein über Versuche ermittelter, statistischer Wert ist.

Hierbei wird ein bestimmter Erfahrungswert der Zeit tl eingesetzt, bei dem der jeweilige Insasse mit großer Wahrscheinlichkeit durch die Kraft S2 in den Sitz zurückgezogen ist. Danach erfolgt dann das Umschalten auf das niedrigere Niveau der Haltekraft S3.

Ebenso wäre es jedoch denkbar, daß das Umschalten von dem höheren zu dem niedrigeren Kraftniveau abhängig von der Insassenposition erfolgt. Bei einer solchen Ausführungsform des erfindungsgemäßen Verfahrens kann die Kraft zum Zurückziehen und die Haltekraft genau dosiert aufgebracht werden, und der Insasse wird nicht in schon zurückgezogener Position noch unnötig mit einer großen Kraft beaufschlagt.

Das Umschalten von dem höheren zu dem niedrigeren Kraftniveau könnte aber ebenso über eine Messung des Gurtbandweges und/oder der Gurtbandgeschwindigkeit erfolgen, da dies eine indirekte Anzeige für die Insassenposition ist.

Besonders bevorzugt erfolgt das Umschalten von dem höheren Krafniveau S2 zu dem niedrigeren Kraftniveau S3 für die Bewegungsberechnung des Insassen mittels Kombination der Parameter, Gurtkraft, Insassenposition, Fahrzeugverzögerung und/oder Gurt-wegmessung und Bewegungsmessung des Antriebes oder Kennwerten (Strom, Leistung) des Antriebes. Mit dieser Kombination der Parameter kann das Umschalten sehr exakt in dem Moment erfolgen, in dem sich der Insasse auch tatsächlich in der zurückgezogenen Position befindet.

Das Umschalten von einem höheren zu einem niedrigeren Kraftniveau erfolgt gemäß einer weiteren bevorzugten Ausführungsform der Erfindung durch Antriebsdaten, wie der Drehrichtung beispielsweise beim Elektromotor, der Stromaufnahme und/oder Leistungsaufnahme des Antriebes.

Es hat sich allgemein gezeigt, daß die Gurtstraffung bei jedem Fahrzeugsitz bevorzugterweise gesondert erfolgt. Das heißt, daß die jeweiligen Parameter, wie Gewicht und Position, von jedem Insassen getrennt bestimmt werden.

Durch Bestimmung von kritischen Fahrsituationen und/oder mit Hilfe einer vorausschauenden Sensorik kann ein Auslösekriterium für Gurtstraffer abgeleitet werden.

Günstigerweise wird bei dem erfindungsgemäßen Verfahren der kritische Fahrzeugzustand durch Überwachung von Lenkwinkel, Abstand zu einem Objekt, Relativgeschwindigkeit, Fahrzeugverzögerung, Gierwinkel, -geschwindigkeit, -beschleunigung, Eigengeschwindigkeit, Lenkwinkel, stärken Richtungswechseln, *µ*-Sprung, Querbeschleunigung, Raddrehzahl und/oder Neigungswinkel oder einer beliebigen Kombination dieser Parameter erkannt.

Dies bedeutet nun also, daß bei einer Notbremsung, die durch eine entsprechende Betätigung des Gaspedals und/oder des Bremspedals und durch Detektion eines Objektes mit vorausschauender Sensorik oder auch durch den Bremsassistenten ausgelöst wird, der Gurtstraffer aktiviert wird und ein Kraftniveau S2 (siehe Fig. 2) angesteuert wird. Die Sensorik kann dabei beispielsweise den Abstand und die Relativgeschwindigkeit messen oder auch berechnen, so daß die Kraft S2 vom Abstand und der Relativgeschwindigkeit abhängt.

Mit beispielsweise den Parametern Abstand zum Objekt, Relativgeschwindigkeit, Eigengeschwindigkeit, Fahrzeugverzögerung oder auch Reibwert wird daraus ein Kollisionszeitpunkt ermittelt, d.h. eine Zeitreserve für den reversiblen Gurtstraffer bis zum Kollisionszeitpunkt berechnet, und aus den Parametern Insassenposition und Insassengewicht wird ein Kraftniveau S2 (bzw. S21 oder S22) berechnet, das ausreicht, den Insassen in eine unkritische, also zurückgezogene Position zu bringen.

Durch die Insassenpositionserkennung und/oder Gurtbandwegmessung und/oder Bewegungsmessung und/oder Drehzahlmessung und/oder Stromaufnahme und/oder Leistungsaufnahme des Antriebs des Sicherheitsgurtes, z.B. des Elektromotors, wird die Position und die Bewegung des Insassen gemessen. Hat der Insasse zum Zeitpunkt tl nun eine unkritische Position erreicht, so kann auf das Kraftniveau S3, das auch wieder an das Gewicht, wie schon bezüglich S2 beschrieben wurde, angepaßt werden kann, umgeschaltet werden. Die Kraft S3 entspricht dabei dann der Haltekraft bei der entsprechenden Fahrzeugverzögerung und dem entsprechenden Insassengewicht.

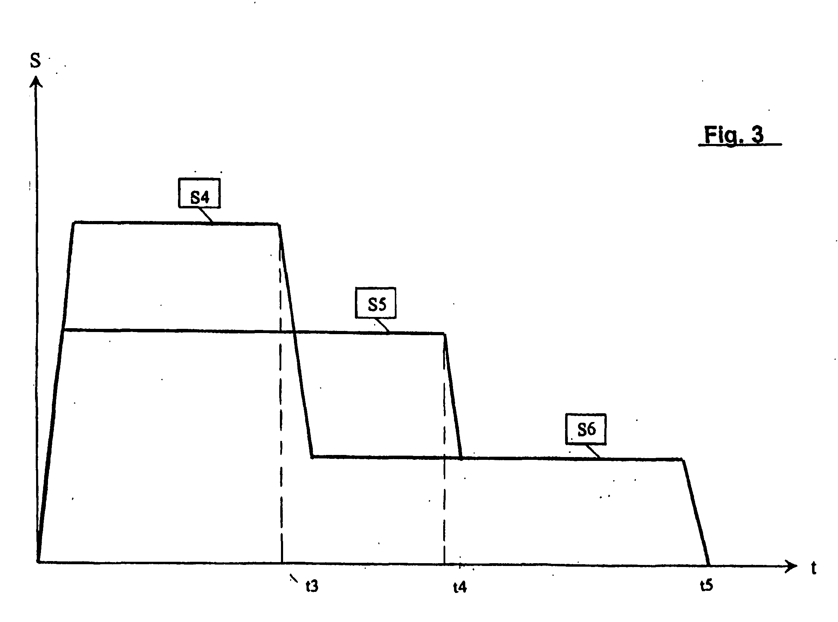

Mit Bezugnahme auf Fig. 3 wird die Anwendung des erfindungsgemäßen Verfahrens mit der vorausschauenden Sensorik beschrieben, mittels der ein kritischer Fahrzustand erfaßt werden kann und die in Abhängigkeit von der Bewegungsrichtung des eigenen Fahrzeugs, die durch Lenkwinkel, Eigengeschwindigkeit, Längs- und Querbeschleunigung, Gierwinkel und/oder Giergeschwindigkeit ermittelt wird, einen Kollisionszeitpunkt und die Kollisionswahrscheinlichkeit berechnet.

Wird mit der Insassenpositionserkennung ein Insasse in einer kritischen Position erfaßt, so wird mit der Insassengewichtserkennung ein Kraftniveau S4 bestimmt, das den Insassen in eine unkritische Position bringt.

Das Kraftniveau S4 ist gemäß dieser bevorzugten Ausführungsform des Verfahrens abhängig von der Zeitreserve bis zum Unfall sowie von der Insassenposition und dem Insassengewicht und kann deshalb unterschiedliche Werte annehmen, wie dies durch die Kraftwerte S4 und S5 bzw. Zeitwerte t3 und t4 in Fig. 3 dargestellt ist.

Aus der Praxis ist es außerdem bekannt, daß bei vielen Unfällen vor dem Unfall oft ein Schleudervorgang auftritt. Dies führt, insbesondere bei den Insassen, zu kritischen Sitzpositionen, also einer Seitenverlagerung, d.h. der Insasse befindet sich beispielsweise zu nahe an der Windschutzscheibe oder B-Säule des Fahrzeuges.

Die Seitenverlagerungen treten insbesondere bei starkem Richtungswechsel, einem µ-Sprung oder beim Anstoßen z.B. an einen Bordstein auf. Dies führt dann zu einer gefährlichen Seitenverlagerung des Insassen, aus der bei einem anschließenden Unfall ein erhöhtes Verletzungsrisko resultiert. Außerdem können dadurch andere Sicherheitseinrichtungen beeinträchtigt werden. Daneben kann der Fahrzeugführer bei einer starken Seitenverlagerung das Fahrzeug schon aus diesem Grund nicht mehr kontrolliert steuern.

Es wird daher bevorzugterweise mit den Fahrzeugparametern Lenkwinkel, Gierrate, Gierbeschleunigung, Querbeschleunigung und Raddrehzahlen gemäß einer weiteren Ausführungsform des erfindungsgemäßen Verfahrens die Fahrzeugbewegung v.a. in seitlicher Richtung bestimmt. Tritt eine Abweichung von der durch den Fahrer vorgegebenen Fahrzeugrichtung auf, so wird der Insasse mit einem Kraftniveau S2 in den Sitz zurückgezogen und mit einem Kraftniveau S3 an den Sitz angebunden. Die erlaubte Abweichung von der vorgegebenen Fahrtrichtung wird dabei insbesondere durch die Eigengeschwindigkeit, die Fahrtrichtung und die Straßenverhältnisse beeinflußt. Diese Faktoren können über dem Fachmann geläufige Verfahren bestimmt werden.

In allen oben beschriebenen Ausführungsformen wird die Straffung des Gurtes bevorzugterweise beendet, wenn das Fahrzeug zum Stillstand gekommen ist oder durch die Fahrzeugdaten ein unkritischer Fahrzustand erkannt wird.

Dies bedeutet, daß die erfindungsgemäße Sicherheits-Rückhalteeinrichtung günstigerweise derart ausgebildet ist, daß der Gurtstraffer reversibel ist.

Dies ist insbesondere deshalb vorteilhaft, da so nach einem kritischen Zustand unter Umständen normal weitergefahren werden kann. Da keine Straffung des Sicherheitsgurtes mehr vorliegt, hat der Fahrer die gewohnte ihm zur Verfügung stehende Bewegungsfreiheit und kann daher das Fahrzeug weiterführen, ohne vorher in die Werkstatt zu müssen oder selber Reparaturen oder auch eine manuelle Entriegelung vornehmen zu müssen.

Jedoch ist ein solches Beenden der Straffung des Gurtes auch deshalb vorteilhaft, damit der Insasse nach einem Unfall eine große Bewegungsfreiheit hat. Damit kann er unter Umständen den Gurt leicht lösen und gegebenenfalls schnell das Fahrzeug verlassen.

Gemäß einer bevorzugten Ausführungsform der Erfindung könnte eine erfindungsgemäße Rückhalteeinrichtung derart vorgesehen sein, daß nach dem Straffen oder dem Zurückziehen des Insassen das Halten des Insassen auch durch Sperrklinken erfolgen kann, die bei Fahrzeugstillstand oder normaler Fahrt wieder gelöst werden. Diese technische Realisierung benötigt nur für kurze Zeit einen höheren Leistungsbedarf.

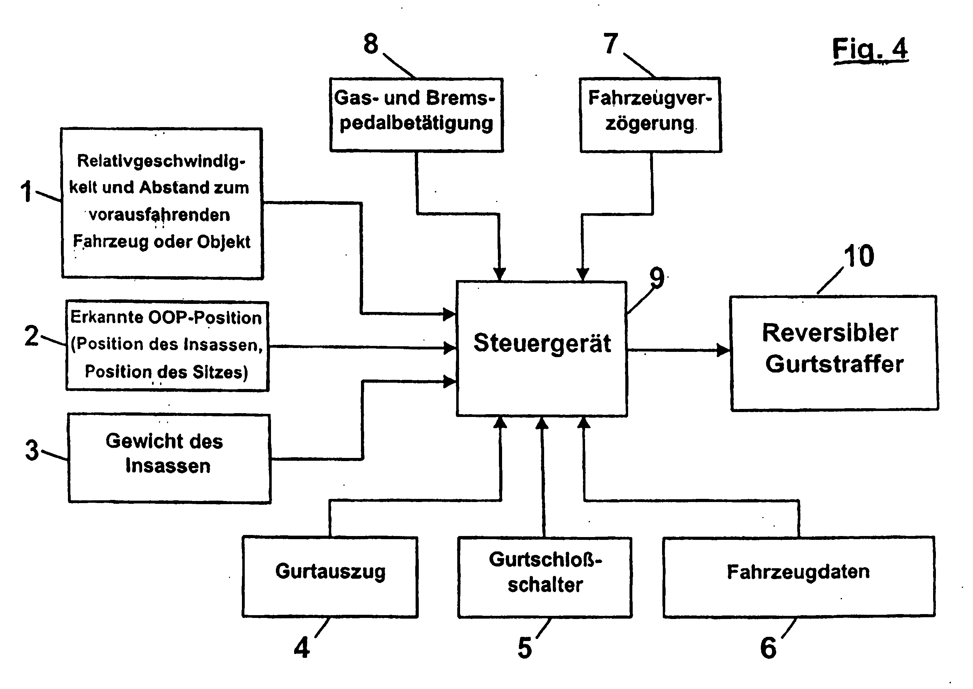

Im folgenden wird die Erfindung anhand eines in Fig. 4 gezeigten Blockdiagramms noch näher erläutert, wobei die Sicherheits-Rückhalteeinrichtung eine vorausschauende Erkennung aufweist, die einen Zusammenstoß, ein Schleudern und/oder einen Überschlag erkennen kann. Dies bedeutet, daß die Rückhalteeinrichtung bei jeglichem erdenklichen kritischen Fahrzustand aktiviert werden können soll.

Wie in Fig. 4 ersichtlich ist, wird mit einer Einrichtung 1 zur vorausschauenden Erkennung, welche z.B. mit Radarsensoren, IR-Sensoren und/oder einer Bildverarbeitung, wie beipielsweise einer CCD-Kamera und Bildauswertung verbunden ist, die Relativgeschwindigkeit und der Abstand zum vorausfahrenden oder stehenden Fahrzeug oder Objekt gemessen.

Eine weitere Einrichtung 2 bestimmt die Insassenposition, vorzugsweise mittels IR-Sensoren, Bildverarbeitung (CCD-Kamera und Bildauswertung), kapazitive Sensoren und/oder Radarsensoren. Damit kann eine sogenannte "OOP-Position" (out of position), also die ungünstige Position des Insassen zum Sitz erkannt werden.

Dabei kann es vorteilhaft sein, wenn im Fahrzeug schon vorhandene Vorrichtungen für die Messung der Relativgeschwindigkeit, des Abstandes und der Insassenposition mitbenutzt werden können, wodurch der zusätzliche konstruktive Aufwand durch die erfindungsgemäße Sicherheits-Rückhalteeinrichtung möglichst gering gehalten werden kann.

Als Mittel 3 zur Ermittlung des Gewichts des Insassen können gemäß einer bevorzugten Ausführungsform druckabhängige Folien im Sitzpolster vorgesehen werden. Eine solche Ausführung hat sich deshalb als vorteilhaft gezeigt, da ihr konstruktiver Aufwand als sehr gering zu betrachten ist.

Daneben könnte das Gewicht des jeweiligen Insassen aber auch mittels Gewichtssensoren am Sitz gemessen werden. Auch eine Gewichtsschätzung mit einer Bildverarbeitung (wie eine CCD-Kamera und Bildauswertung) ist denkbar.

Gemäß der in Fig. 4 gezeigten bevorzugten Ausführungsform wird die Bewegung des Insassen, bei einer kritischen Fahrsituation, über die Gurtauszug-Ermittlungseinrichtung 4 gemessen. Dies hat sich insbesondere deshalb als vorteilhaft erwiesen, da schnelle Bewegungen des Insassen dadurch erfaßt werden können, wie zum Beispiel beim Bremsen oder Schleudern. Dies ist auch mittels einer Bildverarbeitung möglich, was jedoch einen relativ hohen Aufwand erfordert. Denkbar wäre aber auch eine Messung mit einer IR-Sensorik, hierbei ist jedoch die Unterscheidung von Bewegungen des Oberkörpers und Bewegung der Arme problematisch.

Gemäß einer bevorzugten Ausführungsform der Erfindung erfolgt eine Aktivierung des Gurtstraffers nur dann, wenn der jeweils auf einem Sitz befindliche Insasse auch angeschnallt ist. Dies bedeutet, daß die Aktivierung des reversiblen Gurtstraffers, wie in Fig. 4 dargestellt, durch eine Abfrage des Gurtschlosses 5 erfolgt.

Nach der in Fig. 4 gezeigten bevorzugten Ausführungsform der Erfindung dient zusätzlich auch eine Erfassung von Fahrzeugdaten 6, wie beispielsweise der Eigengeschwindigkeit, des Lenkwinkels, des Gierwinkels, der Giergeschwindigkeit, usw. zur Beeinflussung des Auslöse- und Abschaltalgorithmuses für den reversiblen Gurtstraffer.

Vorzugsweise wird auch die Erfassung der Fahrzeugverzögerung 7 zusätzlich zum Gewicht der Insassen zur Steuerung der Gurtkraft benutzt. Dadurch kann die jeweils erforderliche aufzubringende Kraft noch weiter optimiert werden.

Es kann auch die Auswertung der Gas- und/oder Bremspedalbetätigung 8 zusätzlich zur Relativgeschwindigkeit und dem Abstand zum vorausfahrenden oder stehendem Fahrzeug oder Objekt als weiteres Auslösekriterium für den reversiblen Gurtstraffer dienen. Auch dadurch kann eine noch weitere Optimierung des erfindungsgemäßen Verfahrens erfolgen.

Wie der Fig. 4 zu entnehmen ist, werden alle Daten der beschriebenen Erfassungeinrichtungen und Berechnungseinheiten oder eine beliebige Kombination dieser Daten, einem Steuergerät 9 zugeführt, das dann durch Vergleich mit vorgegebenen Grenzwerten bei Überschreiten dieser Werte den reversiblen Gurtstraffer 10 auslöst und, wie oben beschrieben, unterschiedliche Kräfte auf den Insassen aufbringt, die wiederum von den ermittelten Parametern abhängig sein können.

## Patentansprüche

1. Verfahren zum Zurückhalten eines Insassen auf einem Fahrzeugsitz, wobei der Insasse bei Erkennen eines kritischen Fahrzustandes über einen reversiblen Gurtstraffer mit einer Kraft (S2, S4, S5) in den Fahrzeugsitz gezogen wird und dann in einer zurückgezogenen Position mit einer Haltekraft (S3, S6) auf dem Fahrzeugsitz gehalten wird,
**dadurch gekennzeichnet,**
**daß** die Haltekraft (S3, S6) geringer gewählt wird als die Kraft (S2, S4, S5), die zum Zurückziehen des Insassen verwendet wird, so dass der Insasse während des kritischen Fahrzustandes durch diese Haltekraft auf einen niedrigeren Kraftniveau gehalten wird.

2. Verfahren nach Anspruch 1,
**dadurch gekennzeichnet,**
**daß** die Haltekraft (S3, S6) zwischen 100 N und 600 N beträgt.

3. Verfahren nach Anspruch 1,
**dadurch gekennzeichnet,**
**daß** die Kraft (S2, S4, S5) zum Zurückziehen des Insassen zwischen 200 N und 1500 N beträgt.

4. Verfahren nach Anspruch 1,
**dadurch gekennzeichnet,**
**daß** die Kräfte zum Zurückziehen und/oder Halten des Insassen (S2, S3, S4, S5, S6) an das jeweilige Gewicht des Insassen angepaßt werden.

5. Verfahren nach Anspruch 1,
**dadurch gekennzeichnet,**
**daß** die Haltekraft (S3, S6) an die Fahrzeugverzögerung angepaßt wird.

6. Verfahren nach Anspruch 1,
**dadurch gekennzeichnet,**
**daß** die Haltekraft (S3, S6) an die Fahrzeuggeschwindigkeit angepaßt wird.

7. Verfahren nach Anspruch 1,
**dadurch gekennzeichnet,**
**daß** das Umschalten von einem höheren Kraftniveau der Kraft (S2, S4, S5) zum Zurückziehen auf ein niedrigeres Kraftniveau der Haltekraft (S3, S6) nach einer vorbestimmten Zeit erfolgt.

8. Verfahren nach Anspruch 1,
**dadurch gekennzeichnet,**
**daß** das Umschalten von dem höheren zu dem niedrigeren Kraftniveau abhängig von der Insassenposition erfolgt.

9. Verfahren nach Anspruch 1,
**dadurch gekennzeichnet,**
**daß** das Umschalten von dem höheren zu dem niedrigeren Kraftniveau über eine Messung des Gurtbandweges und/oder der Gurtbandbewegung erfolgt.

10. Verfahren nach Anspruch 1,
**dadurch gekennzeichnet,**
**daß** das Umschalten von dem höheren zu dem niedrigeren Kraftniveau durch Bewegungsberechnung des Insassen aus Gurtkraft, Insassenposition, Fahrzeugverzögerung und/oder Gurtwegmessung und Bewegungsmessung des Antriebes oder Antriebskennwerten erfolgt.

11. Verfahren nach Anspruch 1,
**dadurch gekennzeichnet,**
**daß** das Umschalten von dem höheren zu dem niedrigeren Kraftniveau durch Antriebsdaten erfolgt.

12. Verfahren nach Anspruch 1,
**dadurch gekennzeichnet,**
**daß** die Gurtstraffung bei jedem Fahrzeugsitz gesondert erfolgt.

13. Verfahren nach Anspruch 1,
**dadurch gekennzeichnet,**
**daß** der kritische Fahrzeugzustand durch Überwachung wenigstens einer Auswahl der Parameter Lenkwinkel, Abstand zu einem Objekt, Relativgeschwindigkeit, Fahrzeugverzögerung, Gierwinkel, -geschwindigkeit, -beschleunigung, Eigengeschwindigkeit, Lenkwinkel, starken Richtungswechseln, *µ*-Sprung, Querbeschleunigung, Raddrehzahl und/oder Neigungswinkel erfolgt.

14. Verfahren nach Anspruch 1,
**dadurch gekennzeichnet,**
**daß** die Haltekraft (S3, S6) gelöst wird, wenn das Fahrzeug zum Stillstand gekommen ist oder über die Fahrzeugdaten ein unkritischer Fahrzustand erkannt wird.

15. Sicherheits-Rückhalteeinrichtung zum Zurückhalten des Insassen auf einem Fahrzeugsitz während eines kritischen Fahrzustandes, insbesondere zur Verwendung in einem Verfahren nach einem der vorhergehenden Ansprüche 1 bis 10, wobei die Sicherheits-Rückhalteeinrichtung einen Sicherheitsgurt oder dergleichen, eine vorausschauende Erkennung für einen gefährlichen Fahrzustand und eine Insassenpositionserkennung aufweist, wobei bei Erkennen eines gefährlichen Fahrzustandes ein reversibler Gurtstraffer mit einer Kraft beaufschlagt wird, mittels der ein Insasse in den Fahrzeugsitz gezogen wird, und wobei der Insasse in einer zurückgezogenen Position mit einer vorbestimmten Haltekraft auf dem Fahrzeugsitz gehalten wird,
**dadurch gekennzeichnet,**
**daß** die Haltekraft geringer gewählt wird als die Kraft, die zum Zurückziehen des Insassen verwendet wird, so dass der Insasse während des kritischen Fahrzustandes durch diese Haltekraft auf **einem niedrigeren Kraftniveau gehalten wird.**

16. Sicherheits-Rückhalteeinrichtung nach Anspruch 14,
**dadurch gekennzeichnet,**
**daß** der Gurtstraffer (10) reversibel ausgebildet ist.

17. Sicherheits-Rückhalteeinrichtung nach Anspruch 14,
**dadurch gekennzeichnet,**
**daß** die vorausschauende Erkennung (1) zur Erkennung eines Zusammenstoßes, eines Schleuderns und/oder eines Überschlags einen Radarsensor aufweist.

18. Sicherheits-Rückhalteeinrichtung nach Anspruch 14,
**gekennzeichnet**,
daß die vorausschauende Erkennung (1) zur Erkennung eines Zusammenstoßes, eines Schleuderns und/oder eines Überschlags einen IR-Sensor aufweist.

19. Sicherheits-Rückhalteeinrichtung nach Anspruch 14,
**dadurch gekennzeichnet,**
**daß** die vorausschauende Erkennung (1) zur Erkennung eines Zusammenstoßes, eines Schleuderns und/oder eines Überschlags eine Bildverarbeitung aufweist.

20. Sicherheits-Rückhalteeinrichtung nach Anspruch 14,
**dadurch gekennzeichnet,**
**daß** die Aktivierung des Gurtstraffers (10) nur erfolgt, wenn der jeweils auf einem Sitz befindliche Insasse, vorzugsweise mittels eines Gurtschloßschalters (5) als angeschnallt erkannt ist.

## Claims

1. Method of restraining a passenger on a vehicle seat, whereby the passenger is pulled back into the vehicle seat with a force (S2, S4, S5) by means of a reversible belt tensioner when a critical driving state is detected and is then restrained on the vehicle seat in a pulled-back position with a restraining force (S3, S6),
**characterised in that**
the restraining force (S3, S6) is selected so as to be lower than the force (S2, S4, S5) used to pull the passenger back so that the passenger is restrained by the restraining force at a lower force level during the critical driving state.

2. Method as claimed in claim 1,
**characterised in that**
the restraining force (S3, S6) is between 100 N and 600 N.

3. Method as claimed in claim 1,
**characterised in that**
the force (S2, S4, S5) for pulling the passenger back is between 200 N and 1500 N.

4. Method as claimed in claim 1,
**characterised in that**
the forces for pulling back and/or restraining the passenger (S2, S3, S4, S5, S6) are adapted to the respective weight of the passenger.

5. Method as claimed in claim 1,
**characterised in that**
the restraining force (S3, S6) is adapted to the vehicle deceleration.

6. Method as claimed in claim 1,
**characterised in that**
the restraining force (S3, S6) is adapted to the vehicle speed.

7. Method as claimed in claim 1,
**characterised in that**
the switch from a higher force level of the pulling-back force (S2, S4, S5) to a lower force level of the restraining force (S3, S6) is made after a pre-defined time.

8. Method as claimed in claim 1,
**characterised in that**
the switch from the higher to the lower force level is made depending on the passenger position.

9. Method as claimed in claim 1,
**characterised in that**
the switch from the higher to the lower force level is made on the basis of a measurement of the belt strap travel and/or the belt strap movement.

10. Method as claimed in claim 1,
**characterised in that**
the switch from the higher to the lower force level is made on the basis of a calculation of the movement of the passenger derived from the belt force, passenger position, vehicle deceleration and/or belt travel measurement and a measurement of the movement of the drive or drive characteristic values.

11. Method as claimed in claim 1,
**characterised in that**
the switch from the higher to the lower force level is made on the basis of drive data.

12. Method as claimed in claim 1,
**characterised in that**
the belt of every vehicle seat is tensioned separately.

13. Method as claimed in claim 1,
**characterised in that**
the critical vehicle state is determined by monitoring at least a selection of parameters comprising steering angle, distance from an object, relative speed, vehicle deceleration, yaw angle, yaw speed, yaw acceleration, airspeed, steering angle, sharp changes in direction, jump in coefficient of adhesion, lateral acceleration, wheel speed and/or angle of inclination.

14. Method as claimed in claim 1,
**characterised in that**
the restraining force (S3, S6) is triggered when the vehicle has come to a standstill or a non-critical driving state is detected on the basis of the vehicle data.

15. Safety restraint system for restraining the passenger on a vehicle seat during a critical driving state, in particular for use in a method as claimed in one of the preceding claims 1 to 10, which safety restraint system has a safety belt or similar, a predictive system for detecting a dangerous driving state and a passenger position detection system, whereby, when a dangerous driving state is detected, a force is applied to a reversible belt tensioner by means of which the passenger is pulled into the vehicle seat and the passenger is restrained on the seat in a pulled-back position by means of a pre-defined restraining force,
**characterised in that**
the restraining force is selected so as to be lower than the force used to pull the passenger back so that the passenger is restrained by this restraining force at a lower force level during the critical driving state.

16. Safety restraint system as claimed in claim 14,
**characterised in that**
the belt tensioner (10) is reversible.

17. Safety restraint system as claimed in claim 14,
**characterised in that**
the predictive detection system (1) has a radar sensor for detecting a collision, swerving and/or rollover.

18. Safety restraint system as claimed in claim 14,
**characterised in that**
the predictive detection system (1) has an infrared sensor for detecting a collision, swerving and/or rollover.

19. Safety restraint system as claimed in claim 14,
**characterised in that**
the predictive detection system (1) has an image processing system for detecting a collision, swerving and/or rollover.

20. Safety restraint system as claimed in claim 14,
**characterised in that**
the belt tensioner (10) is not activated until the respective passenger occupying a seat is detected as being strapped in, preferably by means of a belt lock switch (5).

## Revendications

1. Procédé pour assurer le maintien d'un passager sur un siège de véhicule, le passager étant tiré dans le siège de véhicule à l'identification d'un état de roulage critique par l'intermédiaire d'un tendeur de ceinture réversible avec une force (S2, S4, S5) et, ensuite, étant maintenu en une position tirée en retrait sur le siège de véhicule par une force de maintien (S3, S6), **caractérisé en ce que** la force de maintien (S3, S6) est choisie de valeur inférieure à la force (S2, S4, S5) utilisée pour la rétraction du passager, de manière que le passager, pendant l'état de roulage critique, soit maintenu à un niveau de force plus faible, au moyen de cette force de maintien.

2. Procédé selon la revendication 1, **caractérisé en ce que** la force de maintien (S3, S6) est comprise entre 100 N et 600 N.

3. Procédé selon la revendication 1, **caractérisé en ce que** la force (S2, S4, S5) utilisée pour la rétraction du passager est comprise entre 200 N et 1500 N.

4. Procédé selon la revendication 1, **caractérisé en ce que** les forces servant à la rétraction et/ou au maintien du passager (S2, S3, S4, S5, S6) sont adaptées au poids spécifique du passager.

5. Procédé selon la revendication 1, **caractérisé en ce que** la force de maintien (S3, S6) est adaptée au ralentissement du véhicule.

6. Procédé selon la revendication 1, **caractérisé en ce que** la force de maintien (S3, S6) est adaptée à la vitesse du véhicule.

7. Procédé selon la revendication 1, **caractérisé en ce que** la commutation d'un niveau de force plus élevé concernant la force (S2, S4, S5) , pour la rétraction, à un niveau de force plus faible de la force de maintien (S3, S6), se fait à expiration d'une durée prédéterminée.

8. Procédé selon la revendication 1, **caractérisé en ce que** la commutation, du niveau de force plus élevé au niveau de force plus faible, se fait en fonction de la position du passager.

9. Procédé selon la revendication 1, **caractérisé en ce que** la commutation, du niveau de force plus élevé au niveau de force plus faible, se fait par l'intermédiaire d'une mesure de la course de déplacement effectué par la ceinture et/ou une mesure du déplacement de la ceinture.

10. Procédé selon la revendication 1,
**caractérisé en ce que** la commutation, du niveau de force plus élevé au niveau de force plus faible, se fait par calcul de déplacement du passager à partir de la force dans la ceinture, de la position du passager, du ralentissement du véhicule et/ou de la mesure de course de déplacement effectuée par la ceinture et par mesure du déplacement du dispositif d'entraînement ou de valeurs caractéristiques, concernant le dispositif d'entraînement.

11. Procédé selon la revendication 1,
**caractérisé en ce que** la commutation, entre le niveau de force plus élevé au niveau de force plus faible, s'effectue en utilisant des données d'entraînement.

12. Procédé selon la revendication 1,
**caractérisé en ce que** la mise sous tension mécanique de la ceinture est effectuée séparément pour chaque siège de véhicule.

13. Procédé selon la revendication 1,
**caractérisé en ce que** l'état critique du véhicule est déterminé par surveillance d'au moins une sélection des paramètres que sont l'angle de braquage, l'espacement par rapport à un objet, la vitesse relative, le ralentissement du véhicule, l'angle de lacet, la vitesse de lacet, l'accélération en lacet, la vitesse propre, l'angle de braquage, de forts changements de direction, un saut du coefficient µ, un accélération transversale, la vitesse de rotation des roues et/ou un angle d'inclinaison.

14. Procédé selon la revendication 1,
**caractérisé en ce que** la force de maintien (S3, S6) est relâchée lorsque le véhicule est passé à l'état immobilisé, ou qu'un état de roulage non critique est identifié par le biais des données de véhicule.

15. Dispositif de sécurité assurant le maintien, pour assurer le maintien du passager sur un siège de véhicule pendant un état de roulage critique, en particulier pour utilisation dans un procédé selon l'une des revendications 1 à 10 précédentes, le dispositif de sécurité assurant le maintien présentant une ceinture de sécurité ou analogue, une identification prévisionnelle d'un état de roulage dangereux et une identification de la position de passager, sachant que, lors de l'identification d'un état de roulage dangereux, un tendeur de ceinture réversible est sollicité par une force, au moyen de laquelle un passager est tiré dans le siège de véhicule et le passager étant maintenu en une position rétractée, avec une force de maintien prédéterminée, sur le siège de véhicule, **caractérisée en ce que** la force de maintien est choisie à une valeur plus faible que la force utilisée pour la rétraction du passager, de manière que, pendant l'état de roulage critique, le passager soit maintenu à un niveau de force plus faible au moyen de cette force de maintien.

16. Dispositif de sécurité assurant le maintien selon la revendication 14, **caractérisé en ce que** le tendeur de ceinture (10) est de nature réversible.

17. Dispositif de sécurité assurant le maintien selon la revendication 14, **caractérisé en ce que** l'identification prévisionnelle (1) présente un capteur radar, pour identifier un choc, un dérapage ou un capotage.

18. Dispositif de sécurité assurant le maintien selon la revendication 14, **caractérise en ce que** l'identification prévisionnelle (1) présente un capteur IR, pour identifier un choc, un dérapage ou un capotage.

19. Dispositif de sécurité assurant le maintien selon la revendication 14, **caractérisé en ce que** l'identification prévisionnelle (1) présente un traitement d'image, pour identifier un choc, un dérapage et/ou un capotage.

20. Dispositif de sécurité assurant le maintien selon la revendication 14, **caractérisé en ce que** l'activation du tendeur de ceinture (10) ne s'effectue que lorsque le passager, se trouvant chaque fois dans un siège, a été identifié comme ayant sa ceinture bouclée, de préférence au moyen d'un interrupteur de fermeture de ceinture (5).
